# DEMANDE DE BREVET EUROPEEN

(11) **EP 4 686 090 A2**
(43) Date de publication de la demande: **28.01.2026**
(21) Numéro de dépôt: 25191491.7
(22) Date de dépôt: 24.07.2025
(51) Int. Cl.: H02S 50/00

(54) **PROCÉDÉ DE GÉNÉRATION DE PROFILS DE SALISSURES POUR DES MODULES PHOTOVOLTAÏQUES D'UNE INSTALLATION PHOTOVOLTAÏQUE**

(30) Priorité: 24.07.2024 FR 2408192
(71) Demandeur: Commissariat à l'Energie Atomique et aux Energies Alternatives, 75015 Paris (FR)
(72) Inventeur: PILAT, Eric, 38054 GRENOBLE CEDEX 9 (FR)
(74) Mandataire: Lavoix

(57) **Abrégé**

La présente invention concerne un procédé de génération de profils de salissures représentant des évolutions temporelles possibles du taux d'encrassement de modules photovoltaïques, le procédé comprenant :
- une phase d'obtention de données représentant l'évolution temporelle du taux d'encrassement des modules photovoltaïques sur un intervalle de temps,
- une phase de traitement des données historiques comprenant les étapes suivantes :
∘ la division de l'intervalle de temps en sous-intervalles, appelés saisons de salissures,
∘ la division de chaque saison de salissures en périodes temporelles,
∘ la détermination de valeurs pour des variables caractéristiques de chaque période temporelle,

- pour au moins une saison de salissures, une phase de génération aléatoire de profils de salissures en fonction des variables caractéristiques de chaque période temporelle de ladite saison de salissures.

## Description

La présente invention concerne un procédé de génération de profils de salissures pour des modules photovoltaïques d'une installation photovoltaïque. La présente invention concerne également un produit programme d'ordinateur et un support lisible d'informations associés.

La prédiction de production dans le domaine des installations photovoltaïques (aussi appelées centrales photovoltaïques) est essentielle pour optimiser l'efficacité opérationnelle, planifier la maintenance et intégrer efficacement l'énergie solaire dans le réseau. Or, la production d'une installation photovoltaïque est fortement dépendante du taux d'encrassement des modules photovoltaïques de l'installation.

Différents modèles physiques ou mathématiques existent pour évaluer la production, mais à ce jour il n'y a pas de solution universelle reconnue. Chaque exploitant utilise alors des modèles au cas par cas selon les spécificités de sa centrale.

Or, ces modèles sont au mieux basés sur des approches simplifiées pour évaluer les taux d'encrassement des modules photovoltaïques, ce qui a pour conséquence que les profils de salissures estimés sont trop éloignés de la réalité. Cela a un impact sur la production énergétique estimée.

Il existe donc un besoin pour un procédé permettant de prédire des taux d'encrassement de modules photovoltaïques de manière plus fiable et qui soit adaptable à tout type d'installation photovoltaïque.

A cet effet, l'invention a pour objet un procédé de génération de profils de salissures représentant des évolutions temporelles possibles du taux d'encrassement de modules photovoltaïques d'une installation photovoltaïque, le procédé étant mis en œuvre par ordinateur et comprenant:
- une phase d'obtention de données historiques pour l'installation photovoltaïque, les données historiques représentant l'évolution temporelle du taux d'encrassement des modules photovoltaïques sur un intervalle de temps, dit de référence, l'intervalle de temps de référence étant une succession de jours passés s'étendant sur plusieurs mois,
- une phase de traitement des données historiques comprenant les étapes suivantes :
   ∘ la division de l'intervalle de temps en sous-intervalles, appelés saisons de salissures, en fonction de l'évolution du taux d'encrassement sur l'intervalle de temps, chaque saison de salissures correspondant à une catégorie de salissures différente de la précédente saison de salissures,
   ∘ la division de chaque saison de salissures en périodes temporelles en fonction de l'évolution du taux d'encrassement sur la saison de salissures, les périodes temporelles étant définies parmi une liste de périodes temporelles comprenant au moins les périodes temporelles suivantes :
      - une période d'encrassement définie comme étant une succession de jours ayant des taux d'encrassement augmentant d'un jour à l'autre de plus d'une valeur prédéterminée,
      - une période stable définie comme étant une succession de jours ayant des taux d'encrassement différant les uns des autres au plus d'une valeur prédéterminée,
      - une période de nettoyage définie comme étant un jour pour lequel le taux d'encrassement est plus faible que le jour précédent d'au moins une valeur prédéterminée,
   ∘ pour chaque saison de salissures, la détermination de valeurs pour des variables caractéristiques de chaque période temporelle,
- pour au moins une saison de salissures, une phase de génération aléatoire de profils de salissures en fonction des variables caractéristiques de chaque période temporelle de ladite saison de salissures, chaque profil de salissures étant représentatif d'une évolution temporelle possible du taux d'encrassement des modules photovoltaïques pour une saison future correspondant à la au moins une saison de salissures considérée.

Suivant d'autres aspects avantageux de l'invention, le procédé comprend une ou plusieurs des caractéristiques suivantes, prises isolément ou suivant toutes les combinaisons techniquement possibles :
- l'étape de division de l'intervalle de temps de référence en saisons de salissures comprend :
   - le calcul d'un taux de salissures moyen pour chaque mois en fonction des données historiques, et
   - l'identification d'une nouvelle saison de salissures à chaque fois que le taux de salissures moyen d'un mois diffère de celui du mois précédent de plus d'une valeur prédéterminée, le mois appartenant à la même saison de salissures que le mois précédent sinon ;
- l'étape de division de chaque saison de salissures en périodes temporelles comprend l'identification des points de début et des points de fin desdites périodes temporelles ;
- la liste de périodes temporelles comprend en outre une période légèrement instable définie comme une succession de jours où des taux d'encrassement varient d'un jour à l'autre sans que cette variation ne dépasse une valeur prédéterminée, le dernier jour de cette période étant identifié lorsque la différence de taux d'encrassement entre le dernier jour et le premier jour dépasse cette valeur prédéterminée ;
- la phase de génération aléatoire de profils de salissures est réalisée sur la base de simulations de Monte-Carlo ;
- les variables caractéristiques de chaque saison de salissures sont choisies au moins parmi les variables suivantes : un ratio journalier de salissures, une efficacité de nettoyage, la durée de la période temporelle, et la fréquence de la période temporelle sur la saison de salissures ;
- la phase de génération aléatoire de profils de salissures comprend, pour chaque saison de salissures considérée, les étapes suivantes :
   a. pour un jour considéré de la saison de salissures, la définition statistique de l'appartenance ou non du jour considéré à une période de nettoyage en fonction des valeurs de fréquence déterminées pour les périodes temporelles de la saison de salissures,
   b. lorsque le jour considéré appartient à une période de nettoyage :
      i. la définition statistique d'une efficacité de nettoyage pour le jour considéré en fonction des valeurs déterminées pour l'efficacité de nettoyage sur la saison de salissures,
      ii. le calcul d'un taux de salissures pour le jour considéré en fonction du taux de salissures du jour précédent et de l'efficacité de nettoyage définie,
      iii. la répétition des étapes précédentes en remplaçant le jour considéré par le jour suivant,
   c. lorsque le jour considéré n'appartient pas à une période de nettoyage :
      i. la définition statistique de la période temporelle à laquelle appartient le jour considéré parmi les périodes temporelles différentes d'une période de nettoyage, la définition statistique étant réalisée en fonction des valeurs de fréquence déterminées pour les périodes temporelles de la saison de salissures,
      ii. la définition statistique d'un ratio journalier de salissures et d'une durée pour la période temporelle à laquelle appartient le jour considéré en fonction des valeurs déterminées pour le ratio journalier de salissures et la durée de ladite période temporelle,
      iii. le calcul d'un taux de salissures pour le jour considéré en fonction du taux de salissures du jour précédent et du ratio journalier de salissures défini,
      iv. la répétition du calcul d'un taux de salissures pour les jours suivants en remplaçant le jour considéré par le jour suivant tant que le jour suivant appartient à la durée définie pour la période temporelle,
      v. lorsque le jour suivant n'appartient pas à la durée définie pour la période temporelle, la répétition des étapes précédentes en remplaçant le jour considéré par le dernier jour suivant ;
- le procédé comprend une phase de mise à jour comprenant les étapes suivantes :
   a. l'obtention de données complémentaires relatives à des prévisions environnementales,
   b. la modification des saisons de salissures et/ou des périodes temporelles des saisons de salissures en fonction des données complémentaires, et
   c. pour chaque saison de salissures, la détermination de variables caractéristiques pour chaque période temporelle de la saison de salissures,
   la phase de mise à jour étant suivie, pour au moins une saison de salissures, d'une phase de génération aléatoire de profils de salissures en fonction des variables caractéristiques de chaque période temporelle de ladite saison de salissures, chaque profil de salissures étant représentatif d'une évolution temporelle possible du taux d'encrassement des modules photovoltaïques pour une saison future correspondant à la au moins une saison de salissures considérée ;
- les données complémentaires comprennent au moins des prévisions météorologiques et/ou des données relatives à des éléments conjoncturels affectant l'encrassement des modules photovoltaïques de l'installation photovoltaïque ;
- les données complémentaires comprennent au moins des prévisions météorologiques, lors de la phase de mise à jour, l'étape de modification comprenant :
   i. la comparaison de la fréquence des pluies prévues dans les prévisions météorologiques avec la fréquence des périodes de nettoyage dans les saisons de salissures en excluant les interventions de nettoyage, et
   ii. la modification des saisons de salissures et/ou des périodes temporelles des saisons de salissures en fonction du résultat de la comparaison ;
- les données historiques sont obtenues à partir de mesures réalisées par des capteurs sur la centrale photovoltaïque ;
- la phase de génération aléatoire est mise en œuvre pour chaque saison de salissures, le procédé comprenant, pour chaque saison de salissures, une phase de sélection d'un profil de salissures parmi les profils de salissures possibles en fonction d'un niveau de risque acceptable prédéfini ;
- le procédé comprend une phase de prédiction de la production de la centrale photovoltaïque en fonction des profils de salissures sélectionnés pour chaque saison de salissures, et de données historiques de production de la centrale photovoltaïque.

L'invention concerne également un produit programme d'ordinateur comprenant des instructions de programme enregistrées sur un support lisible par ordinateur, pour l'exécution d'un procédé de génération tel que décrit précédemment lorsque le programme d'ordinateur est exécuté sur un ordinateur.

L'invention concerne également un support lisible d'informations sur lequel est mémorisé un produit programme d'ordinateur tel que décrit précédemment.

L'invention apparaîtra plus clairement à la lecture de la description qui va suivre, donnée uniquement à titre d'exemple non limitatif, et faite en référence aux dessins dans lesquels :
- la figure 1 est une vue schématique d'un exemple de calculateur permettant la mise en œuvre d'un procédé de génération de profils de salissures pour des modules photovoltaïques d'une installation photovoltaïque,
- la figure 2 est un organigramme d'un exemple de mise en œuvre d'un procédé de génération de profils de salissures pour des modules photovoltaïques d'une installation photovoltaïque,
- la figure 3 est un exemple d'une courbe représentant l'évolution temporelle du taux d'encrassement des modules photovoltaïques sur une période temporelle de référence (2022-2023), la période temporelle de référence ayant été divisée en différentes saisons de salissures, et
- la figure 4 est un exemple d'un algorithme permettant de générer aléatoirement des profils de salissures pour une saison de salissures donnée.

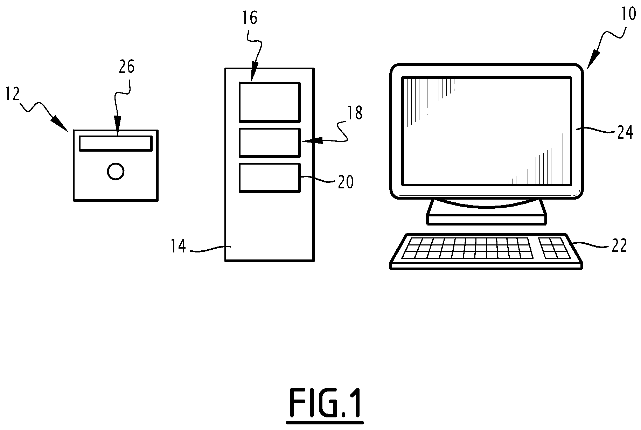

Un calculateur 10 et un produit programme d'ordinateur 12 sont illustrés par la figure 1.

Le calculateur 10, est de préférence, un ordinateur.

Plus généralement, le calculateur 10 est un calculateur électronique propre à manipuler et/ou transformer des données représentées comme des quantités électroniques ou physiques dans des registres de calculateur 10 et/ou des mémoires en d'autres données similaires correspondant à des données physiques dans des mémoires, des registres ou d'autres types de dispositifs d'affichage, de transmission ou de mémorisation.

Le calculateur 10 est en interaction avec le produit programme d'ordinateur 12.

Comme illustré par la figure 1, le calculateur 10 comporte un processeur 14 comprenant une unité de traitement de données 16, des mémoires 18 et un lecteur 20 de support d'informations. Dans l'exemple illustré par la figure 1, le calculateur 10 comprend également des interfaces utilisateur, notamment un clavier 22 et une unité d'affichage 24.

Le produit programme d'ordinateur 12 comporte un support d'informations 26.

Le support d'information 26 est un support lisible par le calculateur 10, usuellement par l'unité de traitement de données 16. Le support lisible d'informations 26 est un médium adapté à mémoriser des instructions électroniques et capable d'être couplé à un bus d'un système informatique.

A titre d'exemple, le support d'informations 26 est une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations 26 est mémorisé le programme d'ordinateur 12 comprenant des instructions de programme.

Le programme d'ordinateur 12 est chargeable sur l'unité de traitement de données 16 et est adapté pour entraîner la mise en œuvre d'un procédé de génération de profils de salissures représentant des évolutions temporelles possibles du taux d'encrassement de modules photovoltaïques d'une installation photovoltaïque, lorsque le programme d'ordinateur 12 est mis en œuvre sur l'unité de traitement 16 du calculateur 10.

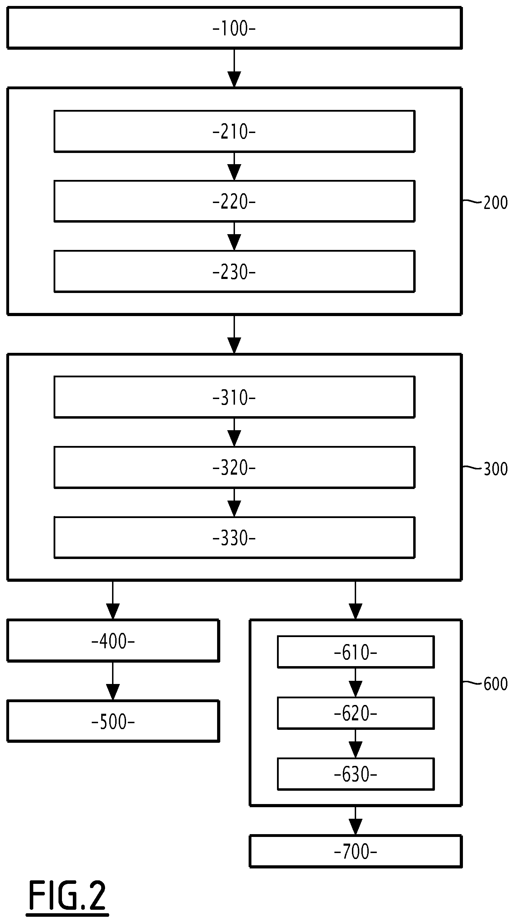

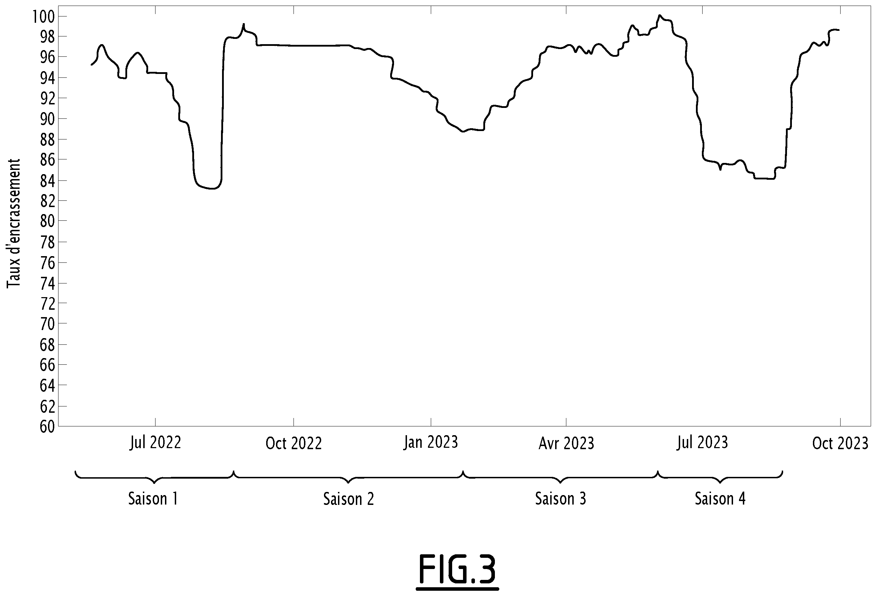

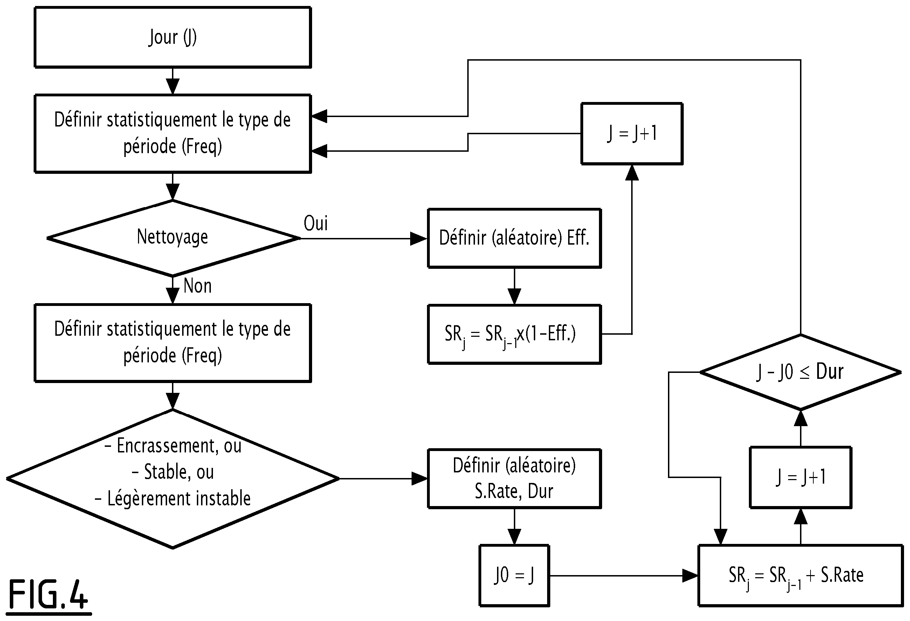

Le fonctionnement du calculateur 10 va maintenant être décrit en référence à la figure 2, qui illustre schématiquement un exemple de mise en œuvre d'un procédé de génération de profils de salissures représentant des évolutions temporelles possibles du taux d'encrassement de modules photovoltaïques d'une installation photovoltaïque. Il est également fait référence aux figures 3 et 4.

Dans ce qui suit, le taux d'encrassement est défini comme étant un ratio représentatif de l'encrassement de modules photovoltaïques d'une installation photovoltaïque par rapport à des modules photovoltaïques dépourvu de salissures.

Le procédé de génération est mis en œuvre par le calculateur 10 en interaction avec le produit programme d'ordinateur 12, c'est-à-dire est mis en œuvre par ordinateur.

Le procédé de génération comprend une phase 100 d'obtention de données historiques pour l'installation photovoltaïque.

Les données historiques représentent l'évolution temporelle du taux d'encrassement des modules photovoltaïques sur un intervalle de temps, dit de référence. L'intervalle de temps de référence est une succession de jours passés s'étendant sur plusieurs mois. De préférence, l'intervalle de temps de référence s'étend sur au moins douze mois.

De préférence, les données historiques sont obtenues à partir de mesures réalisées par des capteurs sur la centrale photovoltaïque. Par exemple, les mesures sont des mesures de courant, de tension ou de puissance réalisées sur l'installation photovoltaïques. Ces mesures sont ensuite traitées pour obtenir les taux d'encrassement formant les données historiques.

Dans un exemple de mise en œuvre, l'expertise de terrain a déterminé que, pour diverses raisons métrologiques, le paramètre le plus pertinent à surveiller est le courant mesuré par les onduleurs côté panneaux photovoltaïques. Ce courant est désigné par les acronymes Icc en français ou Isc en anglais. En se basant sur ce courant et sur les conditions d'irradiance et de température mesurées en parallèle, nous calculons la valeur de courant équivalente aux conditions de test standard (norme EN 60904-3...), en tenant compte de la fiche technique du fabricant, qui précise notamment le coefficient de variation dû à la température. Nous éliminons les mesures où l'irradiance est inférieur à un seuil prédéterminé, préférentiellement 500 W/m². Nous extrapolons afin de combler les trous. Le taux d'encrassement (ratio de salissures) ou PM (performance metrix ou métrique de performance) est la division de ce courant normalisé par le courant initial déterminé par le fabricant du module et indiqué sur l'étiquette au dos du module (résultat de flash test, dernière étape de la fabrication). Nous allons ensuite lisser ces ratios en réalisant un calcul de moyenne glissante sur une plage déterminée, préférentiellement plus ou moins 14 jours. Nous allons alors éliminer tous les points « anormaux » de cette moyenne glissante, c'est à dire ceux qui ne rentrent pas dans les 3 premiers quantiles de la distribution.

La figure 3 illustre un exemple d'évolution du taux d'encrassement de modules photovoltaïques sur l'année 2022-2023.

Le procédé de génération comprend une phase 200 de traitement des données historiques.

La phase 200 de traitement comprend une étape 210 de division de l'intervalle de temps en sous-intervalles, appelés saisons de salissures, en fonction de l'évolution du taux d'encrassement sur l'intervalle de temps. Chaque saison de salissures correspond à une catégorie de salissures différente de la précédente saison de salissures. Ainsi, la notion de saison de salissures n'est ici pas relative au changement climatique, mais au changement de type de profil de salissures.

Dans un exemple de mise en œuvre, l'étape 210 de division de l'intervalle de temps de référence en saisons de salissures comprend :
- le calcul d'un taux de salissures moyen pour chaque mois en fonction des données historiques, et
- l'identification d'une nouvelle saison de salissures à chaque fois que le taux de salissures moyen d'un mois diffère de celui du mois précédent de plus d'une valeur prédéterminée. La valeur prédéterminée est par exemple comprise entre 5% et 10%. Sinon, le mois appartient à la même saison de salissures que le mois précédent.

Dans l'exemple illustré par la figure 3, on distingue ainsi 4 saisons de salissures :
- une saison 1 de début juin à fin août correspondant à une saison « sale »,
- une saison 2 de début septembre à début janvier correspondant à une saison « boueuse »,
- une saison 3 de début février à fin mai correspondant à une saison « propre », et
- une saison 4 de début juin à début septembre correspondant à une saison « sale ». La saison 4 présente ici les mêmes caractéristiques en termes de salissures que la saison 1.

La phase 200 de traitement comprend une étape 220 de division de chaque saison de salissures en périodes temporelles en fonction de l'évolution du taux d'encrassement sur la saison de salissures.

Les périodes temporelles sont définies parmi une liste de périodes temporelles comprenant au moins les périodes temporelles suivantes :
- une période d'encrassement définie comme étant une succession de jours ayant des taux d'encrassement augmentant d'un jour à l'autre de plus d'une valeur prédéterminée. La valeur prédéterminée est par exemple déterminée à partir de tout l'historique exploitable, à savoir par exemple la somme du 3^{ième} quantile des variations journalières et 1,5 fois l'interquartile.
- une période stable définie comme étant une succession de jours ayant des taux d'encrassement différant les uns des autres au plus d'une valeur prédéterminée. La valeur prédéterminée est par exemple déterminée à partir de tout l'historique exploitable, à savoir par exemple la somme du 3^{ième} quantile des variations journalières et 1,5 fois l'interquartile.
- une période de nettoyage définie comme étant un jour pour lequel le taux d'encrassement est plus faible que le jour précédent d'au moins une valeur prédéterminée. La valeur prédéterminée est, par exemple, égale au troisième quantile plus 1,5 fois l'interquartile des différentes variations d'encrassement considérées pendant tout l'historique exploitable.

De préférence, la liste de périodes temporelles comprend en outre une période légèrement instable définie comme une succession de jours où des taux d'encrassement varient d'un jour à l'autre sans que cette variation ne dépasse une valeur prédéterminée. La valeur prédéterminée est par exemple déterminée à partir de tout l'historique exploitable, à savoir par exemple la somme du 3^{ième} quantile des variations journalières et 1,5 fois l'interquartile. Le dernier jour de cette période est identifié lorsque la différence de taux d'encrassement entre le dernier jour et le premier jour de cette période dépasse cette valeur prédéterminée.

Dans un exemple de mise en œuvre, l'étape de division 220 de chaque saison de salissures en périodes temporelles comprend l'identification des points de début et des points de fin desdites périodes temporelles. Cela est réalisé en fonction des caractéristiques de chaque période temporelle.

La phase 200 de traitement comprend une étape 230 de détermination, pour chaque saison de salissures, de valeurs pour des variables caractéristiques de chaque période temporelle.

De préférence, les variables caractéristiques de chaque saison de salissures sont choisies au moins parmi les variables suivantes : un ratio journalier de salissures, une efficacité de nettoyage, la durée de la période temporelle, et la fréquence de la période temporelle sur la saison de salissures.

Le ratio journalier de salissures est défini comme étant la différence du ratio d'un jour par rapport au jour précédent.

Dans un exemple, le ratio journalier de salissures est seulement déterminé pour les périodes d'encrassement et légèrement instables.

Par exemple, pour les périodes légèrement instables, le ratio journalier de salissures est déterminé à partir d'une fonction polynômiale de second degré. Plus précisément, les coefficients de cette équation sont déterminés à partir de l'analyse statistique des périodes légèrement instables identifiées. Plus précisément, ces coefficients sont obtenus à partir d'une étude corrélationnelle entre le taux de pertes journalier et la durée de la période correspondante. Cette étude génère une courbe de tendance de type polynômiale de second degré.

Par exemple, pour les périodes d'encrassement, le ratio journalier de salissures est déterminé. Par exemple, nous allons pour cela calculer les différentes possibilités de ratio journalier en comparant les ratios de deux journées à la fois. La différence de ratio obtenue, divisée par le nombre de jours entre ces deux journées, constitue une estimation du ratio journalier. En compilant toutes les possibilités, nous pourrons déterminer le ratio journalier maximum ou minimum. Par exemple, si le nombre de possibilités dépasse 30, ces limites seront calculées à partir de la moyenne plus ou moins 3 fois l'écart type (sigma).

L'efficacité de nettoyage est définie comme étant un ratio journalier de salissures négatif sur la période temporelle correspondante (ici la période de nettoyage, soit un jour).

La durée d'une période temporelle est la différence entre la fin et le début de la période temporelle.

La fréquence d'une période temporelle sur la saison de salissures est définie comme étant le nombre de fois où la période temporelle est répétée sur la saison de salissures.

Dans l'exemple illustré par la figure 3, la saison 3 est une saison propre qui commence en février et se termine mi-juin 2023. Cette saison se caractérise par les variables mentionnées dans le tableau suivant :

| **Type de période** | **Ratio journalier (S.Rate)** | **Efficacité (Eff.)** | **Durée Dur** | **Fréquence (Freq.)** |
|---|---|---|---|---|
| **Encrassement** | 0,1< SRate < 0,2 | | 1 < Dur < 10 | 10% |
| **Nettoyage** | | 20% < Eff < 60% | 1 Jour | 60% |
| **Stable** | 0 | | 2 <Dur< 5 | 10% |
| **Légèrement instable** | 0,02<SR<0,05 | | 2 <Dur <15 | 15% |

De préférence, toutes les saisons de l'intervalle de temps de référence considéré sont associées à un ensemble de valeurs de variables comme celui du tableau précédent.

Le procédé de génération comprend une phase 300 de génération aléatoire de profils de salissures, pour au moins une saison de salissures, en fonction des variables caractéristiques de chaque période temporelle de ladite saison de salissures.

Chaque profil de salissures est représentatif d'une évolution temporelle possible du taux d'encrassement des modules photovoltaïques pour une saison future correspondant à la au moins une saison de salissures considérée.

La phase 300 de génération aléatoire permet de générer aléatoirement un grand nombre de profils de salissures, typiquement entre 100 et 500.

De préférence, la phase de génération aléatoire 300 est mise en œuvre pour toutes les saisons de salissures de l'intervalle de temps de référence considéré.

De préférence, la phase 300 de génération aléatoire de profils de salissures est réalisée sur la base de simulations de Monte-Carlo.

Dans un exemple de mise en œuvre, illustré en figure 4, la phase de génération aléatoire de profils de salissures comprend, pour chaque saison de salissures considérée, les étapes suivantes :
- Etape 310 : pour un jour J considéré de la saison de salissures, la définition statistique de l'appartenance ou non du jour J considéré à une période de nettoyage en fonction des valeurs de fréquence déterminées pour les périodes temporelles de la saison de salissures,
- Etape 320 : lorsque le jour J considéré appartient à une période de nettoyage :
   ∘ la définition statistique d'une efficacité de nettoyage Eff pour le jour J considéré en fonction des valeurs déterminées pour l'efficacité de nettoyage sur la saison de salissures,
   ∘ le calcul d'un ratio de salissures SRj pour le jour J considéré en fonction du taux de salissures SRj-1 du jour précédent J-1 et de l'efficacité de nettoyage Eff définie,
   ∘ la répétition des étapes précédentes en remplaçant le jour J considéré par le jour suivant J+1,
- Etape 330 : lorsque le jour J considéré n'appartient pas à une période de nettoyage :
   ∘ la définition statistique de la période temporelle à laquelle appartient le jour J considéré parmi les périodes temporelles différentes d'une période de nettoyage, la définition statistique étant réalisée en fonction des valeurs de fréquence déterminées pour les périodes temporelles de la saison de salissures,
   ∘ la définition statistique d'un ratio journalier de salissures S.Rate et d'une durée Dur pour la période temporelle à laquelle appartient le jour J considéré en fonction des valeurs déterminées pour le ratio journalier de salissures et la durée de ladite période temporelle,
   ∘ le calcul d'un taux de salissures SRj pour le jour J considéré en fonction du taux de salissures SRj-1 du jour précédent J-1 et du ratio journalier de salissures S.Rate défini,
   ∘ la répétition du calcul d'un taux de salissures pour les jours suivants en remplaçant le jour J considéré par le jour suivant J+1 tant que le jour suivant J+1 appartient à la durée Dur définie pour la période temporelle,
   o lorsque le jour suivant n'appartient pas à la durée Dur définie pour la période temporelle, la répétition des étapes précédentes en remplaçant le jour J considéré par le dernier jour suivant.

Il est à noter que dans cet algorithme, à l'initialisation, le jour J est le premier jour de l'intervalle de temps de référence. Cet algorithme est, ainsi, mis en œuvre pour tous les jours de l'intervalle de temps de référence afin d'obtenir un taux d'encrassement pour chaque jour de l'intervalle de temps de référence. Cette évolution de taux d'encrassement forme, ainsi, un profil de salissures. L'algorithme est ensuite mis en œuvre un grand nombre de fois pour obtenir l'ensemble des profils de salissures.

Optionnellement, le procédé de génération comprend, pour chaque saison de salissures, une phase de sélection 400 d'un profil de salissures parmi les profils de salissures possibles en fonction d'un niveau de risque acceptable prédéfini. Par exemple, la phase de sélection 400 vise à sélectionner le profil de salissures le plus pessimiste (salissures plus élevées). En variante, c'est le profil de salissures le plus optimiste (le moins de salissures) ou le profil de salissures le plus fréquent qui est sélectionné. D'autres sélections sont également possibles.

La sélection est de préférence réalisée automatiquement en fonction du niveau de risque prédéfini. En variante, la sélection est réalisée par un opérateur.

Optionnellement, le procédé comprend une phase de prédiction 500 de la production de la centrale photovoltaïque en fonction des profils de salissures sélectionnés pour chaque saison de salissures, et de données historiques de production de la centrale photovoltaïque.

Optionnellement, le procédé comprend une phase de mise à jour 600. La phase de mise à jour 600 comprend une étape 610 d'obtention de données complémentaires relatives à des prévisions environnementales.

La phase de mise à jour 600 est, par exemple, réalisée après l'étape de génération 300 (et éventuellement aussi après les phases 400 et 500). En variante, la phase de mise à jour 600 est réalisée entre les phases 200 et 300 permettant de prendre en compte les données complémentaires dès la génération des premiers profils de salissures.

Dans un exemple de mise en œuvre, les données complémentaires comprennent au moins des prévisions météorologiques et/ou des données relatives à des éléments conjoncturels affectant l'encrassement des modules photovoltaïques de l'installation photovoltaïque.

Les prévisions météorologiques sont, par exemple, issues de l'analyse des anomalies identifiées par des modèles comme par exemple celui de « Météo Consult ».

Les évènements conjoncturels sont par exemple des évènements générant beaucoup de poussière, comme par exemple un chantier de construction.

La phase de mise à jour 600 comprend une étape 620 de modification des saisons de salissures et/ou des périodes temporelles des saisons de salissures en fonction des données complémentaires.

Dans un exemple de mise en œuvre, les données complémentaires comprennent au moins des prévisions météorologiques. L'étape de modification 620 comprend :
- la comparaison de la fréquence des pluies prévues dans les prévisions météorologiques avec la fréquence des périodes de nettoyage dans les saisons de salissures en excluant les interventions de nettoyage (interventions programmées), et
- la modification des saisons de salissures et/ou des périodes temporelles des saisons de salissures en fonction du résultat de la comparaison.

Par exemple si lors d'une « saison sale » habituellement sèche on prévoit de fortes pluies fréquentes, la saison de salissures va être modifiée en ce sens que l'algorithme va considérer, pour cette plage temporelle, les caractéristiques de la « saison propre » et non celle de la « saison sale ».

Dans une variante, la modification est réalisée par un opérateur en fonction des données complémentaires. Dans ce cas, l'opérateur modifie manuellement les points de début et ou de fin des saisons de salissures et/ou des périodes temporelles.

La phase de mise à jour 600 comprend, pour chaque saison de salissures, une étape 630 de détermination de variables caractéristiques pour chaque période temporelle de la saison de salissures.

La phase de mise à jour 600 est alors de préférence suivie, pour au moins une saison de salissures, d'une nouvelle phase 700 de génération aléatoire de profils de salissures en fonction des variables caractéristiques de chaque période temporelle de ladite saison de salissures. Chaque profil de salissures est représentatif d'une évolution temporelle possible du taux d'encrassement des modules photovoltaïques pour une saison future correspondant à la au moins une saison de salissures considérée. La phase 700 est mise en œuvre, par exemple, de manière identique à la phase 300.

Optionnellement, le procédé comprend des phases de sélection et/ou de prédiction après la mise à jour, qui sont identiques aux phases de sélection 500 et de prédiction 600.

Ainsi, le présent procédé permet de quantifier et prédire le taux d'encrassement des modules d'une centrale et en conséquence son impact sur la production énergétique.

Le découpage des données historiques sur lesquelles reposent les prédictions, en saisons de salissures, puis en périodes temporelles, permet une estimation plus fiable des taux d'encrassement des modules. Cela permet, ainsi, d'affiner les prédictions de production de la centrale photovoltaïque. En outre, un tel procédé peut être mis en œuvre sur tout type d'installation photovoltaïque.

L'homme du métier comprendra que les modes de réalisation et variantes précédemment décrits peuvent être combinés pour former de nouveaux modes de réalisation pourvu qu'ils soient compatibles techniquement.

## Revendications

1. Procédé de génération de profils de salissures représentant des évolutions temporelles possibles du taux d'encrassement de modules photovoltaïques d'une installation photovoltaïque, le procédé étant mis en œuvre par ordinateur et comprenant :
- une phase d'obtention de données historiques pour l'installation photovoltaïque, les données historiques représentant l'évolution temporelle du taux d'encrassement des modules photovoltaïques sur un intervalle de temps, dit de référence, l'intervalle de temps de référence étant une succession de jours passés s'étendant sur plusieurs mois,
- une phase de traitement des données historiques comprenant les étapes suivantes :
∘ la division de l'intervalle de temps en sous-intervalles, appelés saisons de salissures, en fonction de l'évolution du taux d'encrassement sur l'intervalle de temps, chaque saison de salissures correspondant à une catégorie de salissures différente de la précédente saison de salissures,
∘ la division de chaque saison de salissures en périodes temporelles en fonction de l'évolution du taux d'encrassement sur la saison de salissures, les périodes temporelles étant définies parmi une liste de périodes temporelles comprenant au moins les périodes temporelles suivantes :
• une période d'encrassement définie comme étant une succession de jours ayant des taux d'encrassement augmentant d'un jour à l'autre de plus d'une valeur prédéterminée,
• une période stable définie comme étant une succession de jours ayant des taux d'encrassement différant les uns des autres au plus d'une valeur prédéterminée,
• une période de nettoyage définie comme étant un jour pour lequel le taux d'encrassement est plus faible que le jour précédent d'au moins une valeur prédéterminée,
∘ pour chaque saison de salissures, la détermination de valeurs pour des variables caractéristiques de chaque période temporelle,
- pour au moins une saison de salissures, une phase de génération aléatoire de profils de salissures en fonction des variables caractéristiques de chaque période temporelle de ladite saison de salissures, chaque profil de salissures étant représentatif d'une évolution temporelle possible du taux d'encrassement des modules photovoltaïques pour une saison future correspondant à la au moins une saison de salissures considérée.

2. Procédé selon la revendication 1, dans lequel l'étape de division de l'intervalle de temps de référence en saisons de salissures comprend :
• le calcul d'un taux de salissures moyen pour chaque mois en fonction des données historiques, et
• l'identification d'une nouvelle saison de salissures à chaque fois que le taux de salissures moyen d'un mois diffère de celui du mois précédent de plus d'une valeur prédéterminée, le mois appartenant à la même saison de salissures que le mois précédent sinon.

3. Procédé selon la revendication 1 ou 2, dans lequel l'étape de division de chaque saison de salissures en périodes temporelles comprend l'identification des points de début et des points de fin desdites périodes temporelles.

4. Procédé selon l'une quelconque des revendications 1 à 3, dans lequel la liste de périodes temporelles comprend en outre une période légèrement instable définie comme une succession de jours où des taux d'encrassement varient d'un jour à l'autre sans que cette variation ne dépasse une valeur prédéterminée, le dernier jour de cette période étant identifié lorsque la différence de taux d'encrassement entre le dernier jour et le premier jour dépasse cette valeur prédéterminée.

5. Procédé selon l'une quelconque des revendications 1 à 4, dans lequel la phase de génération aléatoire de profils de salissures est réalisée sur la base de simulations de Monte-Carlo.

6. Procédé selon l'une quelconque des revendications 1 à 5, dans lequel les variables caractéristiques de chaque saison de salissures sont choisies au moins parmi les variables suivantes : un ratio journalier de salissures, une efficacité de nettoyage, la durée de la période temporelle, et la fréquence de la période temporelle sur la saison de salissures.

7. Procédé selon la revendication 6, dans lequel la phase de génération aléatoire de profils de salissures comprend, pour chaque saison de salissures considérée, les étapes suivantes :
d. pour un jour (J) considéré de la saison de salissures, la définition statistique de l'appartenance ou non du jour (J) considéré à une période de nettoyage en fonction des valeurs de fréquence déterminées pour les périodes temporelles de la saison de salissures,
e. lorsque le jour (J) considéré appartient à une période de nettoyage :
i. la définition statistique d'une efficacité de nettoyage (Eff) pour le jour (J) considéré en fonction des valeurs déterminées pour l'efficacité de nettoyage sur la saison de salissures,
ii. le calcul d'un taux de salissures (SRj) pour le jour (J) considéré en fonction du taux de salissures (SRj-1) du jour précédent (J-1) et de l'efficacité de nettoyage (Eff) définie,
iii. la répétition des étapes précédentes en remplaçant le jour (J) considéré par le jour suivant (J+1),
f. lorsque le jour (J) considéré n'appartient pas à une période de nettoyage :
i. la définition statistique de la période temporelle à laquelle appartient le jour (J) considéré parmi les périodes temporelles différentes d'une période de nettoyage, la définition statistique étant réalisée en fonction des valeurs de fréquence déterminées pour les périodes temporelles de la saison de salissures,
ii. la définition statistique d'un ratio journalier de salissures (S.Rate) et d'une durée (Dur) pour la période temporelle à laquelle appartient le jour (J) considéré en fonction des valeurs déterminées pour le ratio journalier de salissures et la durée de ladite période temporelle,
iii. le calcul d'un taux de salissures (SRj) pour le jour (J) considéré en fonction du taux de salissures (SRj-1) du jour précédent (J-1) et du ratio journalier de salissures (S.Rate) défini,
iv. la répétition du calcul d'un taux de salissures pour les jours suivants en remplaçant le jour (J) considéré par le jour suivant (J+1) tant que le jour suivant (J+1) appartient à la durée définie pour la période temporelle,
v. lorsque le jour suivant n'appartient pas à la durée définie pour la période temporelle, la répétition des étapes précédentes en remplaçant le jour (J) considéré par le dernier jour suivant.

8. Procédé selon l'une quelconque des revendications 1 à 7, dans lequel le procédé comprend une phase de mise à jour comprenant les étapes suivantes :
g. l'obtention de données complémentaires relatives à des prévisions environnementales,
h. la modification des saisons de salissures et/ou des périodes temporelles des saisons de salissures en fonction des données complémentaires, et
i. pour chaque saison de salissures, la détermination de variables caractéristiques pour chaque période temporelle de la saison de salissures,
la phase de mise à jour étant suivie, pour au moins une saison de salissures, d'une phase de génération aléatoire de profils de salissures en fonction des variables caractéristiques de chaque période temporelle de ladite saison de salissures, chaque profil de salissures étant représentatif d'une évolution temporelle possible du taux d'encrassement des modules photovoltaïques pour une saison future correspondant à la au moins une saison de salissures considérée.

9. Procédé selon la revendication 8, dans lequel les données complémentaires comprennent au moins des prévisions météorologiques et/ou des données relatives à des éléments conjoncturels affectant l'encrassement des modules photovoltaïques de l'installation photovoltaïque.

10. Procédé selon la revendication 8 ou 9, dans lequel les données complémentaires comprennent au moins des prévisions météorologiques, lors de la phase de mise à jour, l'étape de modification comprenant :
i. la comparaison de la fréquence des pluies prévues dans les prévisions météorologiques avec la fréquence des périodes de nettoyage dans les saisons de salissures en excluant les interventions de nettoyage, et
ii. la modification des saisons de salissures et/ou des périodes temporelles des saisons de salissures en fonction du résultat de la comparaison.

11. Procédé selon l'une quelconque des revendications 1 à 10, dans lequel les données historiques sont obtenues à partir de mesures réalisées par des capteurs sur la centrale photovoltaïque.

12. Procédé selon l'une quelconque des revendications 1 à 11, dans lequel la phase de génération aléatoire est mise en oeuvre pour chaque saison de salissures, le procédé comprenant, pour chaque saison de salissures, une phase de sélection d'un profil de salissures parmi les profils de salissures possibles en fonction d'un niveau de risque acceptable prédéfini.

13. Procédé selon la revendication 12, dans lequel le procédé comprend une phase de prédiction de la production de la centrale photovoltaïque en fonction des profils de salissures sélectionnés pour chaque saison de salissures, et de données historiques de production de la centrale photovoltaïque.

14. Produit programme d'ordinateur comprenant des instructions de programme enregistrées sur un support lisible par ordinateur, pour l'exécution d'un procédé de génération selon l'une quelconque des revendications 1 à 13 lorsque le programme d'ordinateur est exécuté sur un ordinateur.

15. Support lisible d'informations sur lequel est mémorisé un produit programme d'ordinateur selon la revendication 14.
